## Europäisches Patentamt

## European Patent Office

## Office européen des brevets

(19)

(11) Publication number: **0 242 315**
A2

# EUROPEAN PATENT APPLICATION

(12)

(21) Application number: **87500008.5**

(22) Date of filing: **13.03.87**

(51) Int. Cl.⁴: **A 43 D 29/00,** B 29 D 31/00, B 29 C 43/20, B 29 C 65/02 // (B29K23/00, 105:04, B29L31:50)

(30) Priority: **20.03.86 ES 553195**

(43) Date of publication of application: **21.10.87**
**Bulletin 87/43**

(84) Designated Contracting States: **DE FR GB GR IT**

(71) Applicant: **MANUFACTURA ESPANOLA DEL CAUCHO, S.A., Carretera Alicante, 36, Elche - Alicante (ES)**

(72) Inventor: **Salvador Agueda, Ramón, Calle Kursal 2, E-03203 Elche (ES)**

(74) Representative: **Sanz-Bermell Martinez, Alejandro, Baron de Cárcer, 48, E-46001 Valencia (ES)**

(54) **Proceeding to thermosphape soles of several colours in ethyl-vinyl acetate.**

(57) There are disposed expanded pieces conveniently preformed on a mould which is heated at a temperature higher than 140°C and pressed at a pressure of about 60 Tons and these previously preformed pieces can have different densities and resistances.

0242315

The present Patent of Invention consists in a proceeding to thermoshape soles of several colours in expanded ethyl-vinyl acetate.

Ethyl-vinyl acetate has the advantage over other materials owing to its yield and the result of same -most favourable in all cases- of its lightness and its strength.

Nevertheless the proceeding of soles for shoes in ethyl-vinyl acetate has been up to now different from the proposed proceeding, because in the other cases one worked with expanding agents that increased the size of the piece with regard to the size of the mould.

Thus and owing to the presence and action of said expanding agents could be obtained bicoloured soles by preforming the pieces in the moulds which afterwards and after having expanded would form the new sole.

This, when manufacturing multicoloured soles, causes numberless problems which we are not going to enumerate, but which arise from the difficulty produced in the preforming of the soles, the arrangement of the preformed pieces and the cost of the handwork in this case which requires that each manufactured piece be nearly a handmade product of very limited profitability.

2

0242315

Taking into account these considerations and the inventor's experience of the matter, he has conceived, carried out and tested with success a new proceeding which with great advantage over what is know in the art, permits to carry out the manufacture of multicoloured soles with great precision and no difficulty either technical or material, as there does not appear or is required any determinat condition which obstructs the proceeding or the cost of same.

In order to ilustrate better and to make the following explanation clearer, is annexed to this specification and is part of it, one sheet of drawings representing in two figures what constitutes the essential of the present Patent of Invention always to be considered by way of example.

This proceeding consists in taking the piece at mould size manufactured in such a way that the expanding agents carry out their function before being moulded, so that the final product is of one same density and lightness, but is manufactured more accurate and perfect and at exactly the same size as that of the mould in which it has been originated.

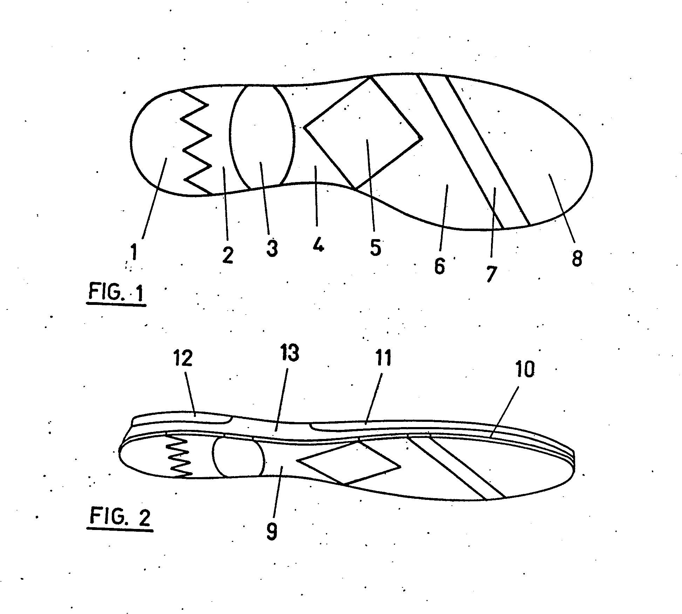

Once this has been effected, one can cut up as many parts as pieces have to compose the new sole by combinig them in as many colours as desired, and thus making up a puzzle-like structure which comprises all parts of the sole. In fig. 1 can be seen an insole in which have been joined, by way of example, several pieces numbered from (1) to (8).

After having concluded this operation, are these pieces put into a mould submitted to a temperature of more than 150º C, and once they have been heated, the are pressed at a temperature below 0º C which speeds up the welding process of the pieces. The press has to work at a pressure of about 60 Tm which produces the thermoshaping of the multicoloured soles.

The same operation can be carried out with regard to the forming fo the sole, in a parallel way, as there we have to do with the same element in its two parts.

This, moreover, involves an important advantage. If one wants to work with several different densities in the sole, in order to favour the production in the footprint of a distinct modification of the material of which the sole is formed with the purpose to obtain greater comfort, or any physiologically favourable condition for the user, there have only to be arranged, as expressed, the necessary parts in a continuous way, in this case, without being necessary to carry them out in several colours, though

4

0242315

it may be convenient in order to distinguish perfectly their parts.

Thus, there can be seen in fig. 2 the completly joined sole (9), wedge and sole, which is represented joined to the wedge formed by (11), (12) and (13), and in which are arranged, if suitable, pieces of different density or lightness, being (10) the union between the two parts of the sole.

For the appropiate effects we should like to state that the present proceeding covers the thermowelding process which has not been known and thus it has never been practised. It has, howewer, been practised by pasting with glues and other elements of plastic pieces or of rubber, but never with ethyl-vinyl acetate which has some extremely higher qualities than those material, and this is irrelevant and below the contents of the present Patent of Invention.

There are therefore included in the present protection all the modifications that are made containing the same essence.

## C L A I M S    0242315

1.- Proceeding to thermoshape soles of several colours in expanded ethyl-vinyl acetate, characterized because one works with mould size pieces that are already expanded, stamped and disposed in a mould making up the complete piece of several elements in different colours which to be thermowelded is heated at a temperature at over 140º C and pressed at a temperature below 0º. C with a pressure of 60 Tm. an operation which accelerates the thermofusion process.

2.- Proceeding according to the previous claim, characterized because the pieces making up the sole can be constituted of expended ethyl-vinyl acetate, but of diverse varieties, in such a way that it makes the formation of soles possible having different hardness depending on the part of the foot to which they corresponds.

3.- Proceeding according to the two previous claims, characterized because the sole can be manufactured of several pieces and/or colours, in such a way that there are disposed parts of different densities as well as concerning the shape of the wedge as also that the sole itself.

Manufactura Española del
Caucho, S.A.

0242315

FIG. 1

FIG. 2